# EUROPÄISCHE PATENTSCHRIFT

(11) **EP 2 134 490 B1**
(45) Veröffentlichungstag und Bekanntmachung des Hinweises auf die Patenterteilung: **04.03.2015**
(21) Anmeldenummer: 08716516.3
(22) Anmeldetag: 13.03.2008
(51) Int. Cl.: B23B 31/10

(54) **WERKZEUGHALTER**
TOOL HOLDER
PORTE-OUTIL

(30) Priorität: 15.03.2007 DE 102007012487
(43) Veröffentlichungstag der Anmeldung: 23.12.2009
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Bockhorni & Kollegen
(86) Internationale Anmeldenummer: PCT/EP2008/002019
(87) Internationale Veröffentlichungsnummer: WO 2008/110370

(56) Entgegenhaltungen:
- DE-A1- 10 360 939
- DE-A1-102004 054 550
- DE-C- 876 793
- DE-U1- 8 706 214
- US-A- 4 604 010
- US-A1- 2005 089 382
- US-A1- 2005 095 076

## Beschreibung

Die vorliegende Erfindung betrifft Werkzeughalter für Werkzeuge, insbesondere für Bohr-, Dreh-, Fräs-, Reib- oder Schleifwerkzeuge, gemäß Oberbegriff des Anspruchs 1 sowie ein System aus einen solchen Werkzeughalter und einem Werkzeug. Ein beispielhaften Werkzeughalter is aus der DE-C-876 793 bekannt.

Derartige Werkzeughalter bestehen unter anderem aus einem Kupplungsschaft, bspw. einen Hohlkegelschaft oder einen Steilkegelschaft, zur Ankupplung des Werkzeughalters an eine Werkzeugmaschine und eine Werkzeugaufnahme.

Es sind einstückige Werkzeughalter bekannt und auch modulare oder mehrteilige, bei denen die Werkzeugaufnahme von dem Kupplungsschaft gelöst werden kann. Modulare Werkzeughalter erlauben den Einsatz vielfältiger Werkzeuge an einem einzigen Kupplungsschaft, wodurch eine Kostenreduzierung ermöglicht wird.

Problematisch bei solchen modularen Werkzeughaltern ist allerdings, dass bei nicht exakter Ausrichtung der Werkzeugaufnahme gegenüber der Drehachse des Kupplungschafts Rundlauffehler entstehen. Diese Rundlauffehler stehen einer hohen Präzision, somit Genauigkeit und Reproduzierbarkeit bei der Bearbeitung von Werkstücken entgegen. Außerdem kann durch die Rundlauffehler der Werkzeughalter zusätzlich noch zu Schwingungen angeregt werden, die eine weitere Verringerung der Bearbeitungsgenauigkeit bewirken. Das gleiche Problem besteht aber auch bei nicht modularen Werkzeughaltern, in denen ein Werkzeug aufgenommen ist.

Um die Bearbeitungsgenauigkeit zu erhöhen, ist in der DE 33 14 591 C2 ein modularer Werkzeughalter vorgeschlagen, bei dem zwischen der Werkzeugaufnahme und dem Kupplungsschaft eine zentrierende Schnittstelle vorgesehen ist, die durch einen oder mehrere Stützflächenabschnitte des über ein Mittelteil mit dem Kupplungsschaft verbundenen Futters gebildet wird, die sich gegen einen bzw. mehrere Gegenflächenabschnitte der Werkzeugaufnahme abstützen. Dabei weist die Werkzeugaufnahme einen Zentrierzapfen auf, der in eine keglige Aufnahmebohrung im Futter einführbar ist und unter elastischer Verformung des mit geringerem Konuswinkel ausgelegten Zentrierzapfens zentriert und axial verspannt wird. Über den Konuswinkel des Zentrierzapfens erfolgt gleichzeitig eine radiale Verspannung, die nach innen wirkt, d.h. den Zentrierzapfen wenigstens teilweise zusammenpresst. Die Verspannungskraft wird dabei durch eine Schraube, die koaxial mit der Drehachse des Werkzeughalters in ein Innengewinde des Zentrierzapfens eingreift, bewirkt.

Nachteilig an diesem Werkzeughalter ist es, daß die elastisch verformbaren Zentrierelemente einen sehr hohen Fertigungsaufwand erfordern, da diese Flächen nur wenig verformbar sind. Dies macht solche Werkzeughalter sehr teuer. Weiterhin weist der verformbare Zentrierzapfen mit der Innenbohrung im Vergleich zum Gesamtdurchmesser des Werkzeughalters nur eine geringe Materialstärke auf, weshalb hier Materialermüdung und -bruch auftreten können.

Aufgabe der vorliegenden Erfindung ist es, einen Werkzeughalter bereit zu stellen, der einfach und kostengünstig herstellbar ist und dennoch eine ausreichende Zentrierung ermöglicht, so dass Rundlauffehler weitestgehend vermieden werden. Insbesondere soll dieser Werkzeughalter auch modular ausgebildet werden können.

Diese Aufgabe wird mit einem Werkzeughalter gemäß Anspruch 1 sowie einem System aus solchen Werkzeughaltern und einem Werkzeug nach Anspruch 17 gelöst, wobei vorteilhafte Ausgestaltungen jeweils Gegenstand der abhängigen Ansprüche sind.

Die Erfindung geht dabei von der Erkenntnis aus, dass eine Zentrierung durch elastische Verformung eines Zapfens, der auch der Verbindung einzelner Module des Werkzeughalters dient, nachteilig ist.

Stattdessen wird vorgeschlagen, dass zwischen dem Werkzeughalter und dem Werkzeug eine zentrierende Schnittstelle vorgesehen ist, die durch einen oder mehrere, einstückig an der Werkzeugaufnahme angeordnete Stützflächenabschnitte gebildet wird, die sich gegen einen bzw. mehrere, einstückig an dem Werkzeug angeordnete Gegenflächenabschnitte abstützen, oder/und dass mindestens zwischen zwei von einander lösbaren Modulen des Werkzeughalters, wie Futter und Werkzeugaufnahme, eine zentrierende Schnittstelle angeordnet ist, die durch einen oder mehrere Stützflächenabschnitte des dem Kupplungschaft näher gelegenen Moduls gebildet sind, die sich gegen einen bzw. mehrere Gegenflächenabschnitte des in Bezug auf die Längsachse des Werkzeughalters benachbarten und weiter vom Kupplungsschaft entfernten Moduls abstützen. Die Schnittstelle soll dabei so ausgebildet sein, dass das Werkzeug in Bezug auf die Werkzeugaufnahme radial unverspannt oder wenigstens radial nach außen verspannt ist bzw. das in Bezug auf die Längsachse des Werkzeughalters weiter vom Kupplungsschaft entfernte Modul gegenüber dem benachbarten, aber dem Kupplungschaft näher gelegenen Modul radial unverspannt oder wenigstens radial nach außen verspannt ist.

Im Rahmen der vorliegenden Erfindung wird als Schnittstelle eine Maschinenschnittstelle verstanden, die durch eine Trennebene senkrecht zu der Längsachse des Werkzeughalters definiert ist, wobei Stützflächenabschnitte und Gegenflächenabschnitte entweder in direktem Kontakt miteinander stehen, oder/und die Abstützung durch Vermittlung eines zusätzlichen Elements, beispielsweise eines Zentrierringes erfolgt. Ein solches vermittelndes Element ist jedoch bei einer solchen Schnittstelle axial auf einen relativ schmalen Bereich begrenzt, so dass insbesondere Verspannungshülsen, wie sie in DE 10 2004 019 869 A1 in Fig. 7 unter dem Bezugszeichen 620 dargestellt sind, nicht als solch vermittelndes Element einer Schnittstelle gelten. Insbesondere gilt im Rahmen der vorliegenden Erfindung, dass das vermittelnde Element sich nur über einen solchen, axial schmalen Bereich erstreckt, der schmaler ist als der axiale Bereich der Verbindung, beispielsweise der Schraubverbindung, der beiden Module an der Schnittstelle selbst, so dass das verbindende Element den axialen Verbindungsbereich vor allem auch nicht beidseitig überdeckt. Allerdings können selbstverständlich solche Verspannungsanordnungen zusätzlich zu der oder den erfindungsgemäßen Schnittstellen beim einem Werkzeughalter der vorliegenden Erfindung vorgesehen sein.

Bei einer radial unverspannten Zentrierung tritt im Wesentlichen keine elastische Verformung in radialer Richtung auf, während bei einer radial nach außen weisenden Verspannung ein Zentrierelement in ein Modul bzw. das Werkzeug eingreift und so einen radial nach außen wirkenden Druck auf dieses Modul bzw. das Werkzeug aufbaut. Auf diese Weise ist kein Zentrierzapfen erforderlich, der aufgrund seiner geringen Basisbreite, die aber hohen Belastungsanforderungen unterliegt, sehr stabil, d.h. dickwandig, und gleichzeitig sehr genau gefertigt sein muss, sondern es genügt eine dünnwandige Ausbildung der Gegenflächenabschnitte der Schnittstelle. Durch diese dünnwandige Ausbildung ist von Natur aus eine Elastizität gegeben, so dass die Zentrierelemente, an denen die Gegenflächenabschnitte angeordnet sind, über einen weiten Bereich nachgiebig sind und daher mit relativ großen Toleranzen gefertigt werden können.

Wenn die Verbindung zwischen den Modulen bzw. dem Werkzeug und der Werkzeugaufnahme im Bereich der Schnittstelle angeordnet ist, können die Module bzw. das Werkzeug auch sehr kurzbauend ausgeführt sein.

Vorteilhaft verläuft wenigstens ein Stützflächenabschnitt in Bezug auf den Radius des Werkzeughalters in einem Winkel größer 0° und kleiner 180° geneigt zur Längsachse und steht in direktem Kontakt mit einem der Gegenflächenabschnitte der Schnittstelle.

In einer bevorzugten Ausgestaltung ist der Werkzeughalter dahingehend modular ausgeführt, dass das Futter und die Werkzeugaufnahme von einander lösbare Module bilden. Mit dieser Ausgestaltung ist ein sehr kostengünstiger modularer Werkzeughalter geschaffen, der über weite Anwendungsbereiche flexibel anpassbar ist.

Wenn zusätzliche Flexibilität hinsichtlich der Anwendungsbereiche erforderlich ist, dann bilden gemäß einer weiteren bevorzugten Ausführungsform der Werkzeughaltergrundkörper, der aus Kupplungsschaft und Mittelteil besteht, sowie das Futter eigenständige, miteinander verbindbare Module. Zwischen dem Mittelteil und dem Futter ist dann bevorzugt ebenfalls eine zentrierende Schnittstelle vorgesehen. Vorzugsweise ist als Verbindung eine Schraubverbindung vorgesehen. Die Verbindung zwischen Mittelteil und Futter ist zweckmäßig im Bereich dieser Schnittstelle angeordnet.

Durch diese zusätzliche modulare Gliederung des Werkzeughalters ist dieser beispielsweise noch besser an verschiedene Werkzeugdurchmesser anpassbar, da nun für jeden Werkzeugdurchmesser eine eigene Werkzugaufnahme in einem daran angepassten Futter vorgesehen werden kann, das an einem standardisierten Werkzeughaltergrundkörper angeordnet wird. Außerdem lassen sich so über verschieden lange Futter auch unterschiedliche Anforderungen an den Abstand des Werkzeugs von der Kupplungsebene des Werkzeughalters in der Werkzeugmaschine berücksichtigen. Selbstverständlich kann auch das Mittelteil als vom Kupplungsschaft lösbares Modul ausgeführt sein oder der Werkzeughalter besteht ausschließlich aus den lösbar von einander ausgebildeten Modulen Futter und Mittelteil.

Die Flexibilität kann schließlich noch weiter erhöht werden, wenn das Futter aus einzelnen Modulen aufgebaut ist und bevorzugt weitere zentrierende Schnittstellen aufweist, wobei die Module des Futters direkt miteinander lösbar verbunden sind.

In einer bevorzugten Ausgestaltung erfolgt die Zentrierung nahe dem Außendurchmesser des Werkzeughalters und zwar insbesondere in Bezug auf den Radius des Werkzeughalters an der Schnittstelle zwischen dem halben Radius und dem Außendurchmesser des Werkzeughalters. Auf diese Weise kann eine größere Materialstärke für das Verbindungselement bspw. die Werkzeugaufnahme vorgesehen werden, als dies mit einem Zentrierzapfen möglich ist. Dadurch ist der Werkzeughalter weniger anfällig für Materialermüdung.

Erfindungsgemäß ist bei einer Schnittstelle ein Plansitz nahe dem Außendurchmesser des Werkzeughalters, insbesondere in Bezug auf den Radius des Werkzeughalters an der Schnittstelle zwischen dem halben Radius und dem Außendurchmesser des Werkzeughalters, vorgesehen, wobei der Plansitz zwischen rechtwinklig zur Drehachse des Werkzeughalters verlaufenden Anlageflächen gebildet ist. Dann ist sichergestellt, dass die Basis der axialen Verspannung an der Schnittstelle möglichst breit ist, wodurch sich die Schwingungsstabilität erhöht. Der Plansitz erlaubt die Übertragung größtmöglicher axialer Verspannungskräfte an der Schnittstelle.

Auch ein Konussitz kann nahe dem Außendurchmesser des Werkzeughalters, insbesondere in Bezug auf den Radius des Werkzeughalters an der Schnittstelle zwischen dem halben Radius und dem Außendurchmesser des Werkzeughalters, vorgesehen sein, wodurch dann auch bei einer radialen Verspannung eine größtmögliche Flexibilität des Materials an der Schnittstelle ermöglicht wird und so die Fertigungskosten aufgrund der so ermöglichten Tolerierung einer höheren Fehlertoleranz innerhalb der Schnittstelle sinken.

Der Stützflächenabschnitt weist zweckmäßig die Form einer konischen Ringfläche auf, wobei auch ein weiterer Stützflächenabschnitt vorgesehen sein kann, der als konische gegenläufige Ringfläche ausgebildet ist. Der Stützflächenabschnitt hintergreift den Gegenflächenabschnitt axial zumindest teilweise. Die konische Ringfläche kann dabei auch konkav oder konvex ausgebildet sein, wobei der Gegenflächenabschnitt dann entweder konvex oder konkav ausgebildet ist.

Alternativ und nicht gemäß der Erfindung kann der Stützflächenabschnitt an einer Schnittstelle die Form einer halbkugelförmigen Ringnut aufweisen und der Gegenflächenabschnitt durch einen halbkugelförmigen Ringvorsprung ausgebildet sein oder der Gegenflächenabschnitt die Form einer halbkugelförmigen Ringnut aufweisen, wobei dann zwischen dem Stützflächenabschnitt und dem Gegenflächenabschnitt Kugeln angeordnet sind. Mit einer solchen Kugellagerung der Schnittstelle lässt sich auf einfache, reibungsverminderte Weise eine azimuthale Orientierung des Werkzeugs um die Längsachse des Werkzeughalters einstellen, bevor die axiale Verspannung festgelegt wird.

Weiterhin kann zwischen dem Stützflächenabschnitt und dem Gegenflächenabschnitt zweckmäßig ein Zentrierring angeordnet sein, mit dem sich eine sehr definierte Einstellung der radialen und axialen Verspannung einstellen lässt. Insbesondere kann dieser einen kreisförmigen Querschnitt aufweisen, wobei dann der Stützflächenabschnitt und der Gegenflächenabschnitt die Gestalt einer halbkugelförmigen Ringnut aufweisen. Ebenso kann der Zentrierring einen rautenförmigen Querschnitt aufweisen, wobei dann Stützflächenabschnitt und Gegenflächenabschnitt jeweils durch zwei konisch gegenläufige Ringstützflächen gebildet sind.

Allgemein ist festzuhalten, dass über eine gegenläufige Gestaltung der Stützflächenabschnitte, bspw. in Form der oben angegebenen gegenläufigen konischen Ringflächen oder der Halbkugelfläche, die Gegenflächenabschnitte sehr genau geführt werden, wodurch sich die Zentriergenauigkeit erhöht.

Mit diesen Zentrierelementen (konische Ringflächen; halbkugelförmiger Ringvorsprung - halbkugelförmige Ringnut; halbkugelförmige Ringnuten - Kugeln bzw. Zentrierring; konisch gegenläufige Ringstützflächen - rautenförmiger Zentrierring) lassen sich sowohl unverspannte Zentrierungen erreichen, indem die Stützflächenabschnitte und die Gegenflächenabschnitte in ihren Maßen so angepasst sind, dass im axial verspannten Zustand der Module gegeneinander keine radiale Verspannung vorliegt, als auch z.B. bei der Werkzeugaufnahme eine zumindest radial nach außen weisende Verspannung einstellen, indem die Gegenflächenabschnitte der Werkzeugaufnahme weniges unter Maß gegenüber den Stützflächenabschnitten bemessen sind, so dass sie im axial verspannten Zustand gegenüber den Stützflächenabschnitten radial verspannt sind.

Zur Schwingungsdämpfung des Werkzeughalters ist zweckmäßig zumindest in einem Bereich der Schnittstelle zwischen den Stützflächen- und Gegenflächenabschnitten der Schnittstelle ein Schwingungsdämpfer angeordnet. Dieser ist bevorzugt als Ring aus einem weichen Material, wie Kunststoff oder Blei, gebildet, und in einer Vertiefung in dem Plansitz angeordnet, damit er nicht seitlich herausgedrückt werden kann. Alternativ kann auch ein Ring aus einem festen Material wie Stahl, Keramik, Kupfer oder Messing oder dgl., als Schwingungsdämpfer vorgesehen sein. Dieser Ring muss dann nicht in einer Vertiefung aufgenommen werden, sondern kann seitlich angeordnet sein.

Bevorzugt weist die Schnittstelle eine Verdrehsicherung auf. Dadurch wird zum einen sichergestellt, dass beispielsweise eine Schraubverbindung an einer Schnittstelle nicht während der Werkstückbearbeitung überlastet wird, und zum anderen, dass eine Werkstückbearbeitung in beiden Drehrichtungen des Werkzeughalters möglich ist, also z.B. die Werkzeugaufnahme nicht aus dem Futter herausgedreht wird.

Zur optimalen Drehmomentübertragung weist die Schnittstelle des Werkzeughalters eine polygonförmigen Kontur auf, die gleichzeitig auch als Verdrehsicherung wirkt. Hierdurch ist ein Verdrehen der Module gegeneinander unter Krafteinwirkung wirksam unterbunden.

Besonders vorteilhaft ist die lösbare Verbindung an einer Schnittstelle eine Schraubverbindung, wobei wenigstens ein Modul oder das Werkzeug eine Aufnahmebohrung aufweist, in die ein Außengewinde formschlüssig eingreift. Eine solche Schraubverbindung lässt sich besonders einfach vorsehen.

Bei einer solchen Schraubverbindung kann das Außengewinde an einer frei drehbaren Zylinderschraube angeordnet sein, die an dem anderen Modul bzw. dem Werkzeug axial mit ihrem Kopf anliegt. Oder das Außengewinde kann an einem Gewindestift angeordnet sein, der ein weiteres Außengewinde aufweist, das in das Innengewinde einer Aufnahmebohrung in dem anderen Modul bzw. dem Werkzeug formschlüssig eingreift. Zweckmäßig sind dann die Außengewinde des Gewindestiftes gegenläufig und mit unterschiedlicher Steigung, gegenläufig und mit gleicher Steigung oder gleichläufig und mit unterschiedlicher Steigung ausgebildet.

Allerdings kann auch eine kraftschlüssige Verbindung, nämlich z.B. eine Spannverbindung vorgesehen sein. Hierbei ist ein Spannsystem aus Zugstück mit Zugteller und einer Schirmzange vorgesehen, wobei die Schirmzange bei Betätigung des Zugstücks über den Zugteller ein Modul gegenüber dem anderen Modul der Schnittstelle verspannt. Zweckmäßig kann das Zugstück durch Eingriff durch den Kupplungsschaft betätigbar ausgebildet sein, wobei insbesondere ein am Zugstück angeordnetes Außengewinde in ein entsprechendes Innengewinde eingreift, das in Wirkverbindung mit dem Kupplungsschaft steht. Alternativ kann das Zugstück auch durch Eingriff entlang oder quer zu der Werkzeughalterlängsachse durch das Werkzeug betätigbar ausgebildet sein, wobei insbesondere ein Druckstück vorgesehen ist, das auf den Zugteller einwirkt, und das Druckstück über eine Spannschraube betätigt wird.

Mit der erfindungsgemäßen zentrierenden Schnittstelle lassen sich somit nicht nur die einzelnen, von einander lösbaren Module eines Werkzeughalters sehr genau zentriert verspannen, sondern es wird auch eine Zentrierung zwischen Werkzeug und Werkzeughalter zur Verfügung gestellt, wobei in diesem Fall der Werkzeughalter selbst nicht modular aufgebaut sein muss, sondern im wesentlichen einstückig aufgebaut sein kann, d.h. dass die Module Kupplungsschaft, Mittelteil, Futter und Werkzeugaufnahme des Werkzeughaltergrundkörpers nicht von einander lösbar ausgeführt sind und an diesem Werkzeughaltergrundkörper insbesondere auch keine Verspannungsanordnung vorgesehen ist, die eine Verspannung des Futters gegenüber dem Werkzeughaltergrundkörper bewirkt. Unter einem im Wesentlichen einstückiger Werkzeughalter wird dabei ein Werkzeughalter verstanden, der insbesondere keine solche Verspannungsanordnung aufweisen, die zumindest im Betrieb des Werkzeughalters in einem axialen Verspannungsabschnitt des Futters eine Verspannkraft mit einer in axialer Richtung wirkenden Verspannungskraftkomponente ausübt und zumindest an einer auf die Werkzeughalterlängsachse bezogenen Seite einen oder mehrere Stützflächenabschnitte aufweist, die an einem bzw. mehreren Gegenflächenabschnitten des aus Kupplungsschaft, Mittelteil, Futter und Werkzeugaufnahme gebildeten Werkzeughaltergrundkörpers verschiebbar anliegen und sich gegenüber diesen radial verspannt abstützen.

In diesem Zusammenhang wird auch selbständiger Schutz für ein System aus Werkzeughalter und darin aufgenommenen Werkzeug beansprucht, bei dem zumindest eine erfindungsgemäß zentrierende Schnittstelle vorgesehen ist.

Weitere Besonderheiten und Vorteile der vorliegenden Erfindungen werden im Folgenden anhand der Erläuterung der in den Zeichnungen dargestellten Ausführungsbeispiele deutlich werden. Dabei zeigen jeweils im Schnitt
- Fig. 1: eine erste Ausführungsform des erfindungsgemäßen Werkzeughalters,
- Fig. 2: eine zweite Ausführungsform des erfindungsgemäßen Werkzeughalters,
- Fig. 3: eine dritte Ausführungsform des erfindungsgemäßen Werkzeughalters,
- Fig. 4: eine vierte Ausführungsform des erfindungsgemäßen Werkzeughalters,
- Fig. 5: eine fünfte Ausführungsform des erfindungsgemäßen Werkzeughalters,
- Fig. 6: eine sechse Ausführungsform des erfindungsgemäßen Werkzeughalters,
- Fig. 7: eine siebente Ausführungsform des erfindungsgemäßen Werkzeughalters,
- Fig. 8: eine Detaildarstellung der Schnittstelle zwischen Mittelteil und Werkzeugaufnahme des Werkzeughalters gemäß Fig. 7,
- Fig. 9 a) bis d): eine Detaildarstellung von vier beispielhaften alternativen Schnittstellenausbildungen,
- Fig. 10: eine achte Ausführungsform des erfindungsgemäßen Werkzeughalters,
- Fig. 11: eine Detaildarstellung der Schnittstelle zwischen Werkzeugaufnahme und Werkzeug des Werkzeughalters gemäß Fig. 10 in der Schnittebene Z-Z,
- Fig. 12: eine neunte Ausführungsform des erfindungsgemäßen Werkzeughalters und
- Fig. 13: eine zehnte Ausführungsform des erfindungsgemäßen Werkzeughalters.

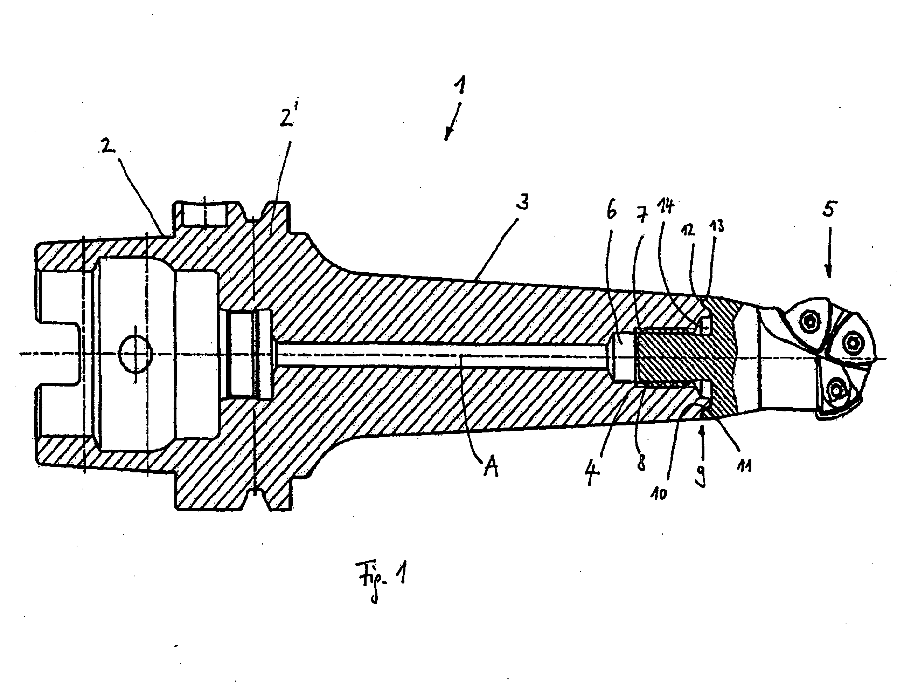

In Fig. 1 ist rein schematisch eine erste Ausführungsform des erfindungsgemäßen Werkzeughalters 1 aufgezeigt. Der Werkzeughalter 1 umfasst einen Kupplungsschaft 2 in Form einer Hohlschaftkupplung, ein Mittelteil 2', ein Futter 3 und eine Werkzeugaufnahme 4, die miteinander einstückig verbunden sind. In der Werkzeugaufnahme 4 ist ein Werkzeug 5, genauer gesagt ein Fräser, aufgenommen. Die Werkzeugaufnahme 4 weist eine Aufnahmebohrung 6 mit einem Innengewinde 7 auf, in das das Außengewinde 8 eines Zapfens des Werkzeugs 5 eingreift. Zwischen Werkzeugaufnahme 4 und Werkzeug 5 ist eine Schnittstelle 9 ausgebildet, die das Werkzeug 5 in Bezug auf die Längsachse A des Werkzeughalters 1 zentriert.

Die Zentrierung erfolgt dabei über konische Stützflächenabschnitte 10 der Werkzeugaufnahme 4, die auch konkav oder konvex ausgebildet sein können, an denen Gegenflächenabschnitte 11 des Werkzeugs 5 anliegen. Die axiale Verspannung von Werkzeugaufnahme 4 und Werkzeug 5 erfolgt über einen Plansitz zwischen den Stützflächenabschnitten 12 und den Gegenflächenabschnitten 13. Die Stützflächenabschnitte 10 und die Gegenflächenabschnitte 11 können im Zusammenhang mit dem Plansitz so bemessen sein, dass keine radiale Verspannung erzeugt wird. Bevorzugt sind die Stützflächenabschnitte 10 und die Gegenflächenabschnitte 11 jedoch so bemessen, dass das Werkzeug 5 gegenüber der Werkzeugaufnahme 4 radial nach außen verspannt ist, da dadurch eine zusätzlich Reduzierung der Schwingungsanfälligkeit des Werkzeughalters 1 erreicht wird.

Da die Gegenflächenabschnitte 11 in Bezug auf den Außendurchmesser des Werkzeughalters 1 außen liegen und zwar in Bezug auf den Radius des Werkzeughalters 1 zwischen dem halben Radius und dem Außendurchmesser, ist das Zentrierelement des Werkzeugs 5, an dem die Gegenflächenabschnitte 11 angeordnet sind, relativ dünnwandig und somit elastisch ausgeführt. Deshalb können die Stützflächenabschnitte 10 und Gegenflächenabschnitte 11 mit relativ großen Toleranzen und damit relativ kostenunintensiv gefertigt werden, da das Zentrierelement des Werkzeugs 5 über einen weiten Bereich nachgiebig sind. Diese Nachgiebigkeit der Zentrierung wird noch unterstützt durch den im vorderen Bereich 14 vergrößerten Durchmesser der Aufnahmebohrung 6, wodurch auch das Zentrierelement der Werkzeugaufnahme 4, an der die Stützflächenabschnitte 10 angeordnet sind, relativ dünnwandig und damit elastisch ist.

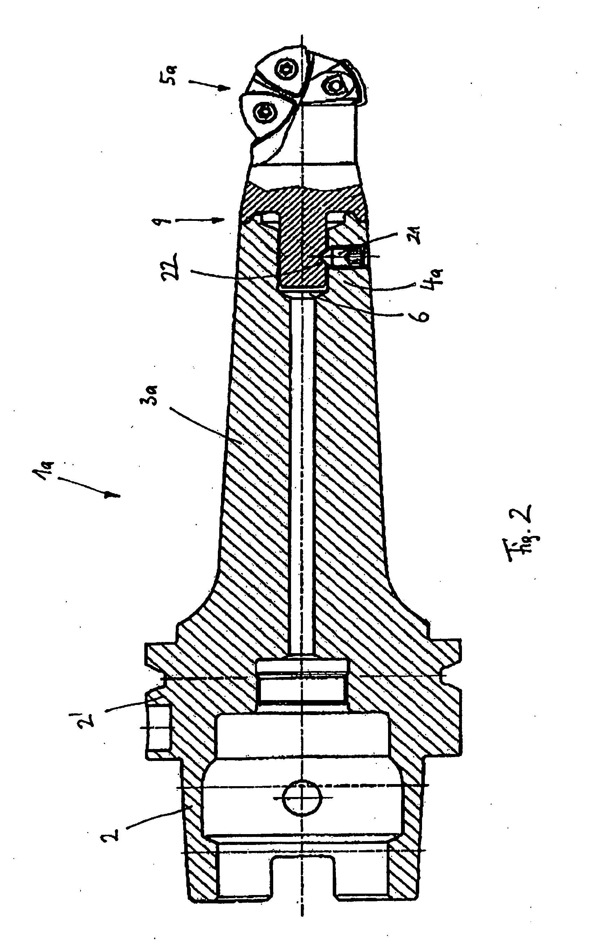

In Fig. 2 ist rein schematisch im Schnitt eine zweite Ausführungsform des erfindungsgemäßen Werkzeughalters 1a gezeigt, wobei im Folgenden stets dieselben Bezugszeichen für dieselben Elemente verwendet werden. Der Werkzeughalter 1a besteht wiederum aus einem einstückigen Werkzeughaltergrundkörper mit den Elementen Kupplungsschaft 2, Mittelteil 2', Futter 3a und Werkzeugaufnahme 4a, wobei die Werkzeugaufnahme 4a in ihrer Aufnahmebohrung 6 kein Innengewinde aufweist, sondern einen seitlich geführten Gewindestift 21 mit einem Konus, der in eine Rille oder radiale Senkung 22 eines Zapfens des Werkzeugs 5a einführbar ist, um so das Werkzeug 5a in der Werkzeugaufnahme 4a axial festzulegen. Zwischen der Werkzeugaufnahme 4a und dem Werkzeug 5a ist wiederum eine zentrierende Schnittstelle 9 vorgesehen, die wie in Fig. 1 ausgeführt ist.

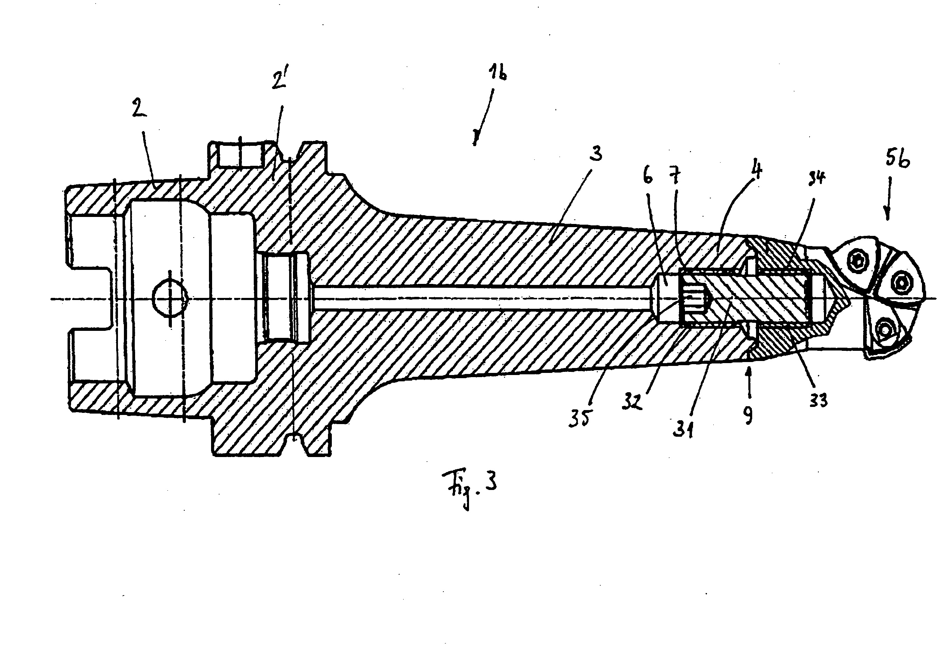

In Fig. 3 ist rein schematisch im Schnitt eine dritte Ausführungsform des erfindungsgemäßen Werkzeughalters 1b gezeigt, wobei hier die Verbindung zwischen den Modulen Werkzeugaufnahme 4 und Werkzeug 5b über einen Gewindestift 31 hergestellt wird, der mit zwei gegenläufigen Außengewinden 32, 33 versehen ist, die in entsprechende Innengewinde 7, 34 der Aufnahmebohrung 6 bzw. einer Aufnahmebohrung des Werkzeugs 5b eingreifen. Die Verbindung von Werkzeugaufnahme 4 und Werkzeug 5b erfolgt an der Schnittstelle 9 durch beidseitiges Eindrehen des Gewindestiftes 31, wozu an dessen kupplungsseitigem Ende ein Innensechskant 35 vorgesehen ist. Die Außengewinde 32, 33 des Gewindestiftes 31 sind mit unterschiedlicher Steigung versehen.

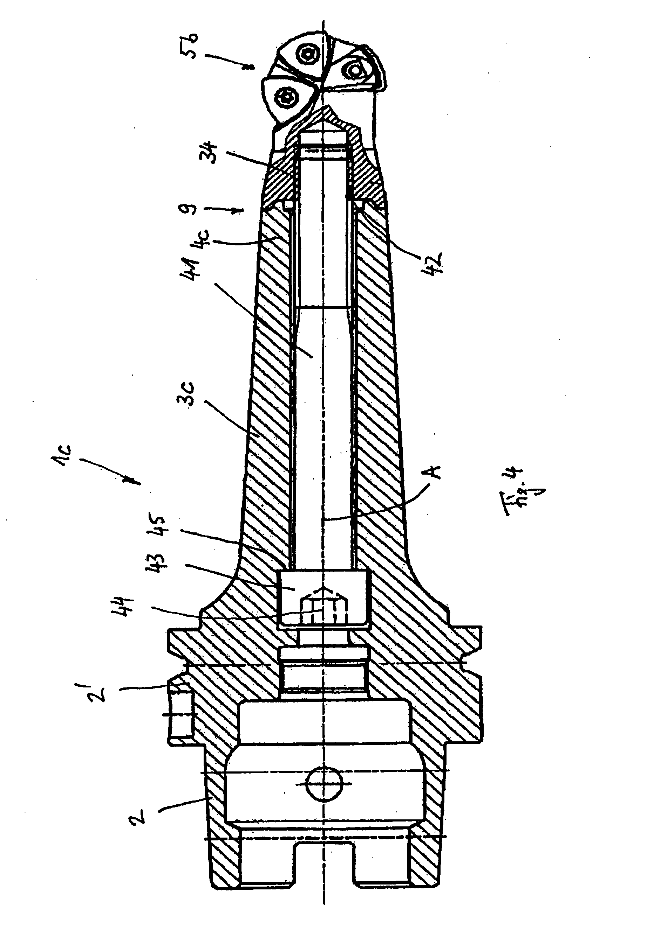

In Fig. 4 ist rein schematisch im Schnitt eine vierte Ausführungsform des erfindungsgemäßen Werkzeughalters 1c gezeigt, wobei hier die Verbindung zwischen den Modulen Werkzeugaufnahme 4c und Werkzeug 5b über eine entlang der Längsachse A des Werkzeughalters 1c angeordnete Schraube 41 hergestellt wird, deren Außengewinde 42 in das Innengewinde 34 der Aufnahmebohrung des Werkzeugs 5b eingreift. Der Kopf 43 der Schraube 41 ist mit einem Innensechskant 44 versehen und liegt an einem Vorsprung 45 der Werkzeugaufnahme 4c an, so dass Werkzeugaufnahme 4c und Werkzeug 5b miteinander axial verspannt werden können.

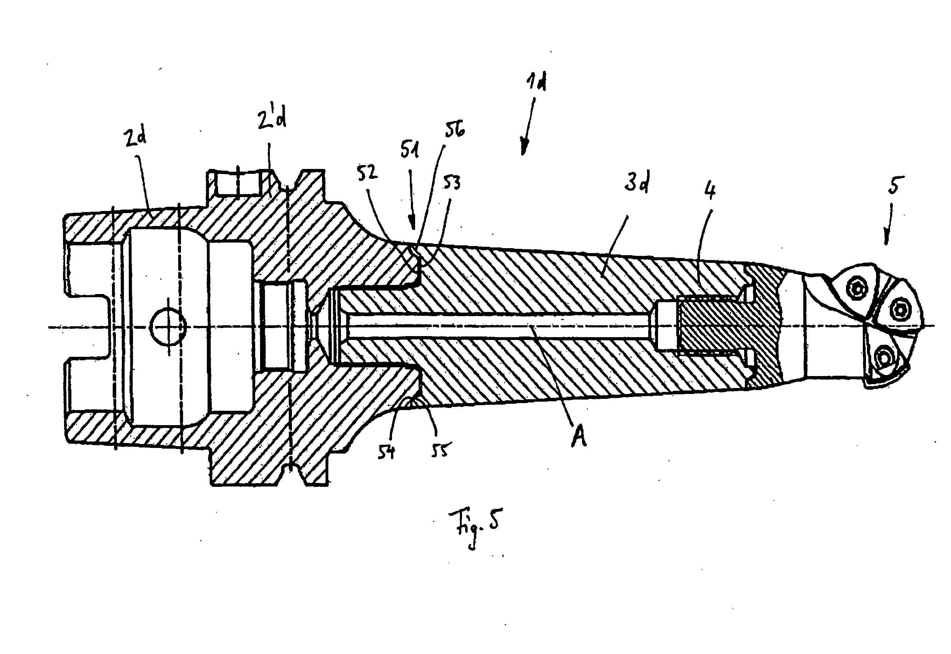

In Fig. 5 ist eine fünfte Ausführungsform des erfindungsgemäßen Werkzeughalters 1d rein schematisch im Schnitt dargestellt. Diese Ausführungsform unterscheidet sich dadurch von der ersten, dass der Werkzeughaltergrundkörper nicht einstückig sondern modular aufgebaut ist. Und zwar ist das Futter 3d, das einstückig mit der Werkzeugaufnahme 4 verbunden ist, mit dem Mittelteil 2'd lösbar verbunden und über eine Schnittstelle 51 zentriert. Diese Schnittstelle 51 ist im wesentlichen gleich aufgebaut wie die Schnittstelle 9 zwischen Werkzeugaufnahme 4 und Werkzeug 5, wobei allerdings der Plansitz zwischen Stützflächenabschnitt 52 und Gegenflächenabschnitt 53 in Bezug auf den Radius näher an der Längsachse A des Werkzeughalters 1d angeordnet ist als die konischen Stützflächenabschnitte 54 sowie Gegenflächenabschnitte 55. Dadurch weist das Zentrierelement 56 des Futters 3d trotz des größeren Außendurchmessers des Werkzeughalters 1d im Bereich der Schnittstelle 51 ebenfalls eine ausreichende Flexibilität auf, während das Mittelteil 2'd im Bereich der Schnittstelle 51 eher unflexibel ist.

Durch diese spezielle Ausgestaltung können in dem Werkzeughalter 1d verschiedene Futter 3d eingesetzt werden, die beispielsweise unterschiedliche Länge aufweisen können oder für die Aufnahme verschiedener Werkzeugaufnahmen angepasst sind. Zusätzlich könnte natürlich auch das Futter selbst noch einmal modular ausgeführt sein, wodurch sich eine noch größere Flexibilität in der Anpassung des Werkzeughalters 1d hinsichtlich seiner Längenanpassung erzielen lässt.

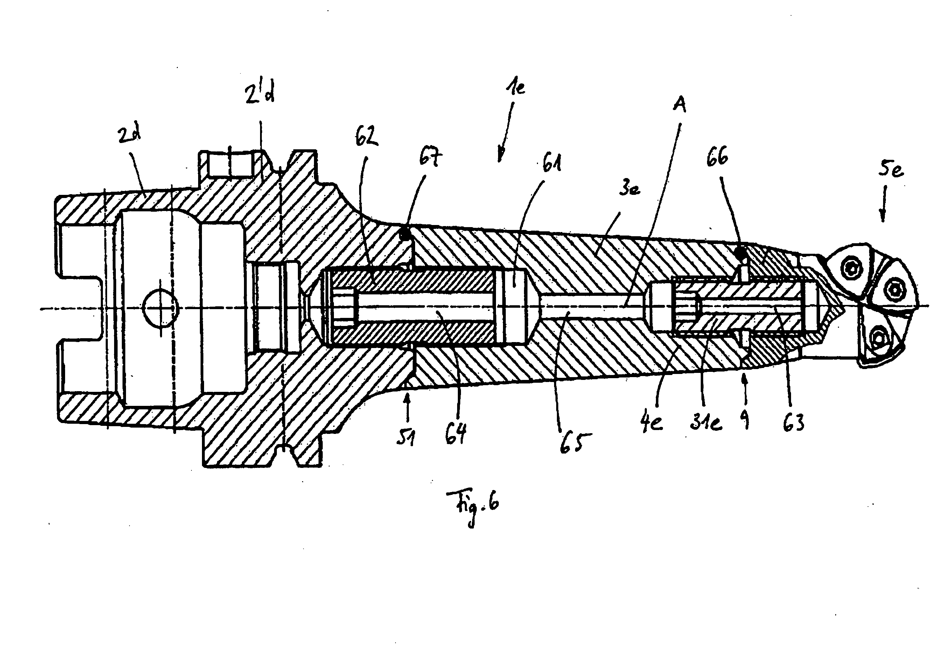

In Fig. 6 ist eine sechste Ausführungsform des erfindungsgemäßen Werkzeughalters 1e rein schematisch im Schnitt gezeigt. Im Unterschied zum Werkzeughalter 1e aus Fig. 5 umfasst dieser modulare Werkzeughalter 1e ein Futter 3e, das mit der Werkzeugaufnahme 4e einstückig verbunden ist und das eine Aufnahmebohrung 61 zur Aufnahme eines Gewindestiftes 62 aufweist zur Verbindung von Futter 3e und Mittelteil 2'd. Das Werkzeug 5e ist hier ebenfalls über einen Gewindestift 31e mit der Werkzeugaufnahme 4e verbunden. Beide Gewindestifte 31e, 61 weisen zentrische Kanäle 63, 64 auf, so dass durch den Kanal 65 des Futters 3e Kühlmittel dem Werkzeug 5e zugeführt werden kann. Die Schnittstellen 9, 51 sind durch Verdrehsicherungen 66, 67 gesichert, so dass das Werkzeug 5e in beide Drehrichtungen in Bezug auf die Längsachse A des Werkzeughalters 1e belastet werden kann, ohne dass die Verbindungen zwischen den Modulen 2'd, 3e, 4b und dem Werkzeug 5e gelöst oder überlastet würden. Die Verdrehsicherungen 67, 67 sind so ausgeführt, dass bspw. je ein kugelförmiger Vorsprung jeweils einstückig an Mittelteil 2'd und Werkzeugaufnahme 4e vorgesehen ist, der im verspannten Zustand des Werkzeughalters 1e in entsprechende kugelförmige Ausnehmungen in Futter 3e und Werkzeug 5e formschlüssig eingreift. Durch die Gewindestifte 31e und 62 müssen beim Verspannen des Werkzeughalters 1e das Werkzeug 5e und die Module, Futter 3e und Mittelteil 2'd nicht gegeneinander verdreht werden.

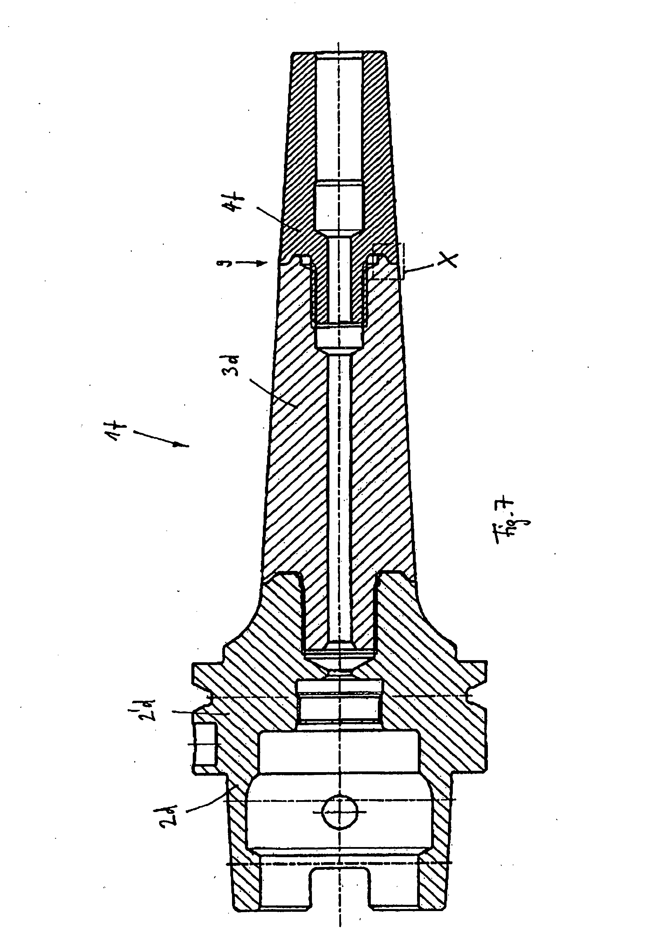

In Fig. 7 ist eine siebente Ausführungsform des erfindungsgemäßen Werkzeughalters 1f rein schematisch im Schnitt dargestellt. Dieser Werkzeughalter 1f unterscheidet sich von dem Werkzeughalter 1d gemäß Fig. 5 nur dahingehend, dass die Werkzeugaufnahme 4f nicht einstückig mit dem Futter 3d verbunden ist, sondern als modulares Schrumpffutter für ein aufzunehmendes Werkzeug ausgeführt ist. Für der Ausführung der Werkzeugaufnahme 4f als Schrumpffutter ist es besonders vorteilhaft, dass durch die zentrierende Schnittstelle 9 die Module Werkzeugaufnahme 4f und Futter 3d bei der Erwärmung des Schrumpffutters 4f gegeneinander nicht verspannen, d.h. etwa verkippen können.

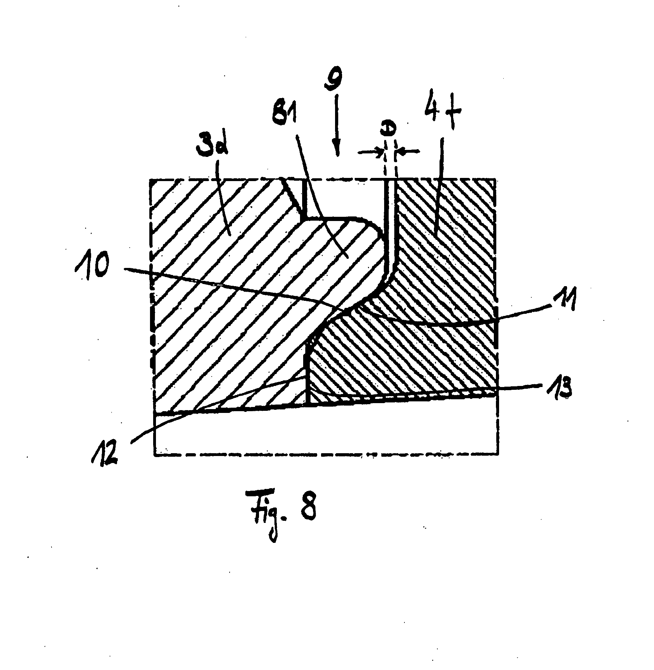

In Fig. 8 ist der in Fig. 7 mit X bezeichnete Ausschnitt der Schnittstelle 9 vergrößert im Schnitt abgebildet. Deutlich zu erkennen sind die Stützflächenabschnitte 10, 12 und die Gegenflächenabschnitte 11, 13 der Schnittstelle 9 von Futter 3d und Werkzeugaufnahme 4f. Außerdem ist deutlich, dass im vollständig axial verspannten Zustand von Futter 3d und Werkzeugaufnahme 4f zwischen dem Zentrierelement 81 des Futters 3d, an dem die Stützfläche 10 abgeordnet ist, und der Werkzeugaufnahme 4f in axialer Richtung ein Abstand D besteht. Dadurch ist sichergestellt, dass auch bei unterschiedlicher wärmebedingter Ausdehnung von Futter 3d und Werkzeugaufnahme 4f der axiale Anschlag stets nur über die Stützflächenabschnitte 12 und Gegenflächenabschnitte 13 definiert wird, wodurch sich eine hohe Reproduzierbarkeit der Zentrierung der Schnittstelle 9 ergibt. Außerdem ist dadurch auch eine eventuelle axiale Verspannung der Werkzeugaufnahme 4f nach außen reproduzierbar definiert.

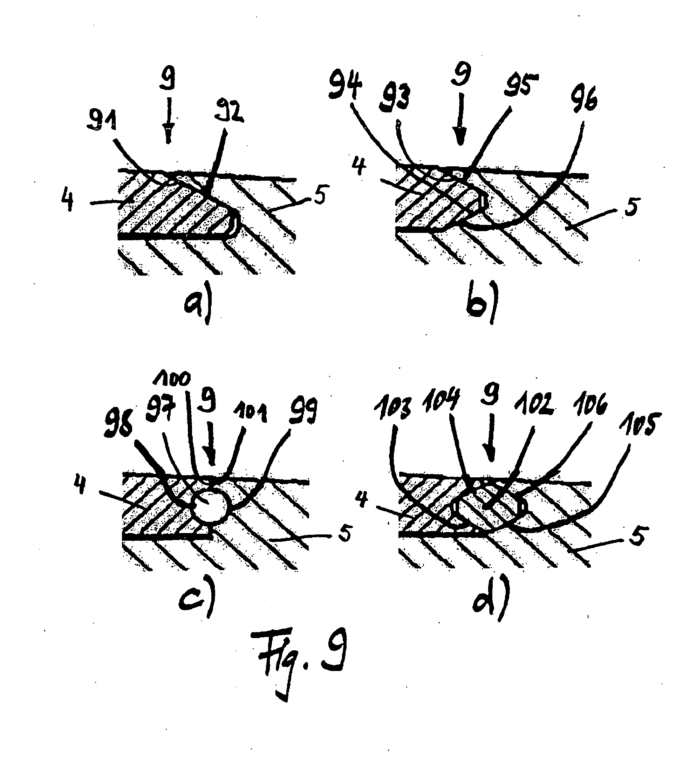

In Fig. 9 a) bis d) sind entsprechend dem Werkzeughalter 1 nach Fig. 1 verschieden ausgebildete Schnittstellen 9 zwischen den Modulen Werkzeugaufnahme 4 und Werkzeug 5 im verspannten Zustand rein schematisch im Schnitt aufgezeigt.

Die Schnittstelle 9 in Fig. 9 a) weist einen konischen Stützflächenabschnitt 91 auf, der einen konisch gegenläufigen Gegenflächenabschnitt 92 teilweise axial hintergreift.

In Fig. 9 b) sind zwei Stützflächenabschnitte 93, 94 in Form von konisch gegenläufigen Ringflächen vorgesehen, die zwei Gegenflächenabschnitte 95, 96 in Form von konisch gegenläufigen Ringflächen teilweise axial hintergreifen.

In Fig. 9 c) umfasst die Schnittstelle 9 Kugeln 97, die sowohl von den Stützflächenabschnitten 98 als auch von den Gegenflächenabschnitten 99 umschlossen sind. Weiterhin ist ein Plansitz zwischen den Stützflächenabschnitten 100 und den Gegenflächenabschnitten 101 ausgebildet. Statt des Plansitzes kann auch nur ein teilweises Umschließen der Kugeln 97 durch die Stützflächenabschnitten 98 und Gegenflächenabschnitten 99 vorgesehen sein. Weiterhin kann auch ein einzelner Zentrierring mit kreisförmigem Querschnitt statt der einzelnen Kugeln 97 vorgesehen sein, oder ein solcher Zentrierring ist einstückig mit der Werkzeugaufnahme 4 verbunden, so dass die Werkzeugaufnahme 4 direkt in die Gegenflächenabschnitte 99 des Werkzeugs 5 eingreift.

In Fig. 9 d) ist schließlich eine Schnittstelle 9 dargestellt, die einen rautenförmigen Zentrierring 102 umfasst, an dem Stützflächenabschnitte 103, 104 und Gegenflächenabschnitte 105, 106 anliegen, die jeweils als konisch gegenläufige Ringflächen ausgebildet sind. Auch hier ist wieder ein Plansitz vorgesehen.

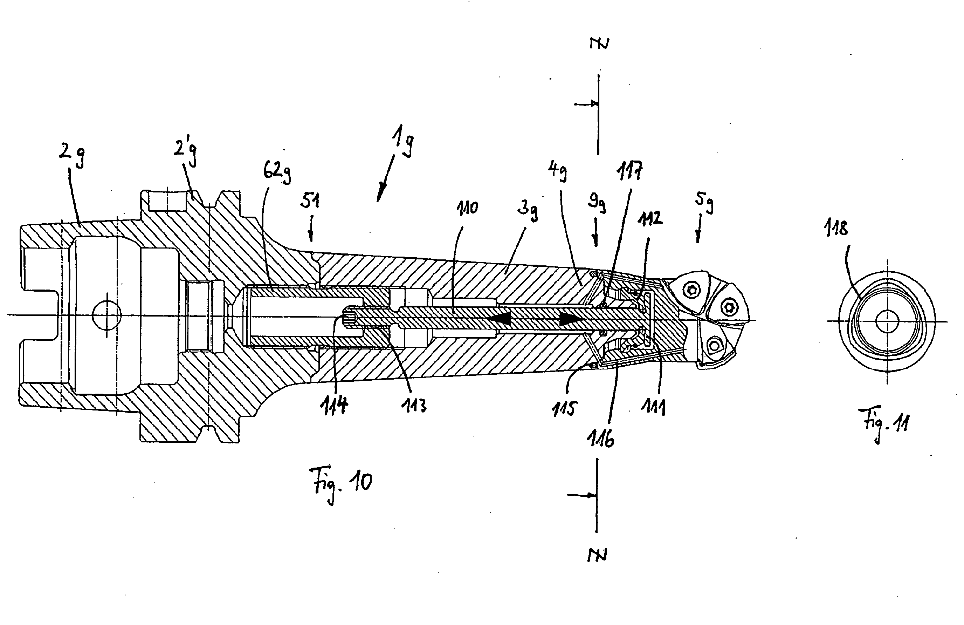

In Fig. 10 ist eine achte Ausführungsform des erfindungsgemäßen Werkzeughalters 1g rein schematisch im Schnitt dargestellt. Hier erfolgt wie in Fig. 6 die Verbindung von Futter 3g und Mittelteil 2'g über einen Gewindestift 62g. Zur lösbaren Verbindung des Werkzeugs 5g mit der Werkzeugaufnahme 4g ist ein Spannsystem vorgesehen, das aus einem Zugstück 110 mit daran befestigtem Zugteller 111 und einer Schirmzange 112 besteht. Das Zugstück 110 greift über eine Gewindeverbindung 113 in den Gewindestift 62g ein und kann gegenüber diesem durch Verdrehen mittels eines in einen Innenseckskant 114 eingreifenden Schlüssel (nicht gezeigt) verspannt werden. Aufgrund der Verspannung drückt der Spannteller 111 auf die Schirmzange 112, wodurch diese sich aufspreizt und das Werkzeug 5g gegenüber der Werkzeugaufnahme 4g verspannt.

Die Schnittstelle 9g wird gedämpft durch einen Ring aus einem weichem Material, wie Kunststoff oder Blei, der in einer Ringnut aufgenommen ist, damit dass weiche Material nicht seitlich herausgedrückt werden kann.

Das Kühlmittel für das Werkzeug 5g wird durch seitliche Bohrungen 116 geführt, die direkt durch die Kontaktflächen der Schnittstelle 9g führen, so dass sie ohne weiteres dicht sind. Das Zugstück 110 wird gegenüber der Werkzeugaufnahme 4g durch einen O-Ring 117 abgedichtet. Das Kühlmittel wird dabei vom Kupplungsschaft 2g her entweder zentral durch das Zugstück 110, das mit seitlichen Ausleitungen (nicht gezeigt) versehen ist, geführt oder durch Bohrungen in dem Gewindestift 62g (nicht gezeigt). Alternativ kann natürlich auch eine zentrale Kühlmittelzufuhr entsprechend Fig. 6 vorgesehen sein.

In Fig. 11 ist die Schnittstelle 9g entlang des Schnitts Z-Z näher dargestellt. Deutlich zu erkennen ist, dass die Kontur 118 der Schnittstelle 9g polygonförmig gestaltet ist zur besseren Drehmomentübertragung. Diese polygonförmige Kontur 118 kann bei allen erfindungsgemäßen Schnittstellen vorgesehen sein.

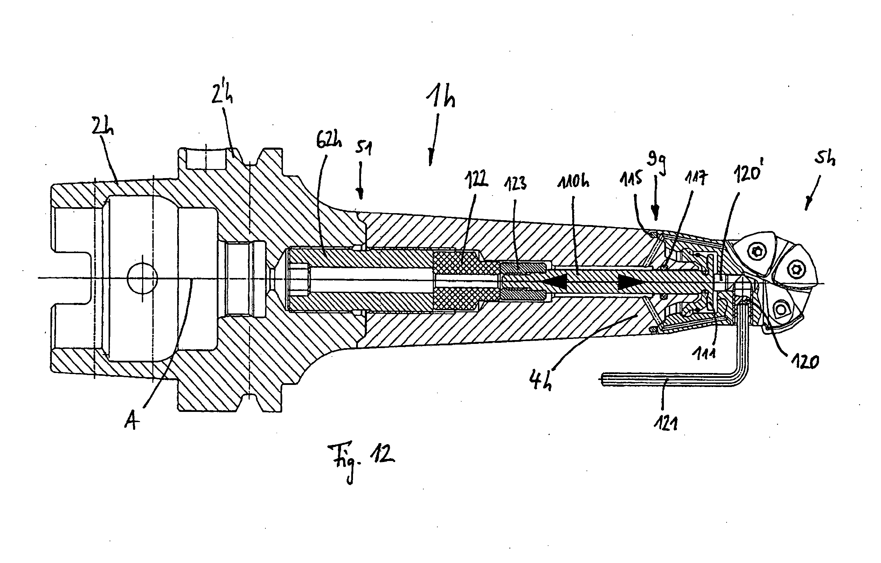

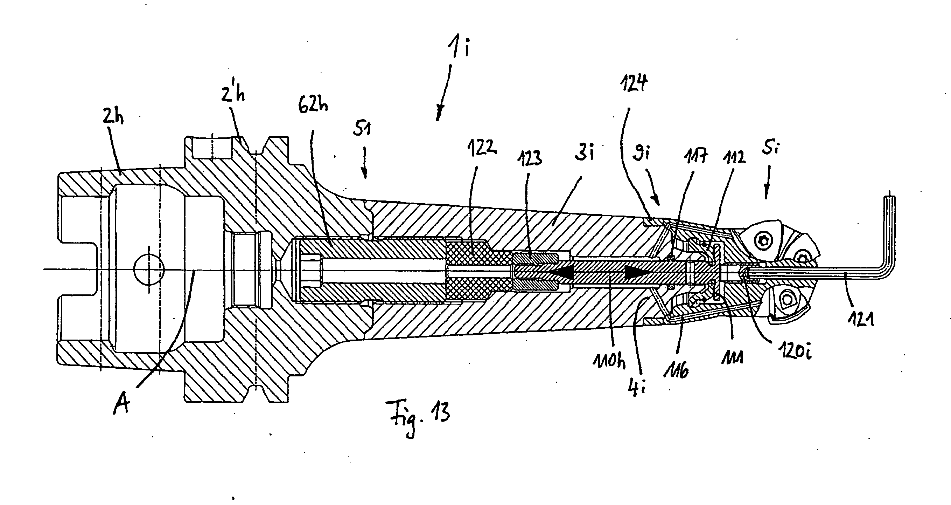

In Fig. 12 und 13 sind unterschiedliche Ausgestaltungen des Spannsystems von Fig. 10 bei einer neunten und zehnten Ausführungsform des erfindungsgemäßen Werkzeughalters 1h, 1i abgebildet. Hier sind keine Gewindeverbindungen 113 mit dem in Wirkverbindung mit dem Kupplungsschaft 2h stehenden Gewindestift 62h vorgesehen, sondern eine direkte Betätigung des Zugtellers 111.

In Fig. 12 wird eine Verspannkraft auf den Zugteller 111 über eine Spannschraube 120 ausgeübt, die auf ein Druckstück 120' wirkt, das mit einer keilförmigen Anlagefläche für die Spannschraube 120 versehen ist. Die Spannschraube 120 ist dabei quer zur Werkzeughalterlängsachse A durch das Werkzeug 5h geführt. In Fig. 13 ist zu erkennen, dass die Spannschraube 120i entlang der Werkzeughalterlängsachse A im Werkzeug 5i angeordnet ist und direkt auf den Spannteller 111 wirkt. Eine Verspannung des Spanntellers 111 und damit des Werkzeugs 5h, 5i gegenüber der Werkzeugaufnahme 4h, 4i erfolgt jeweils durch Eindrehen der Spannschraube 120, 120i über einen Schlüssel 121. Zur Lösung der Spannverbindung ist ein Druckgummi 122 oder eine Feder oder dgl. vorgesehen, das auf eine am Zugstück 110 angeordnete Spannmutter 123 wirkt. Die Rückstellkraft des Druckgummis 122 kann durch Einstellung der Spannmutter 123 gegenüber dem Zugstück 110 eingestellt werden.

Schließlich ist in Fig. 13 noch eine alternative Ausgestaltung der Schwingungsdämpfung aus Fig. 11 und 12 gezeigt. Hier ist ein Ring 124 aus einem festen, wie Material, Stahl, Keramik, Kupfer oder Messing oder dgl. vorgesehen, weshalb der Ring nach außen nicht abgestützt werden muss.

Durch die vorstehenden Ausführungen ist deutlich geworden, dass mit dem erfindungsgemäßen Werkzeughalter 1, 1a, 1b, 1c, 1d, 1e, 1f, 1g, 1h, 1i ein vielseitig einsetzbares, insbesondere modulares Werkzeughaltersystem bereitgestellt ist, das relativ einfach und kostengünstig herstellbar ist und dennoch eine hohe Zentrierung und damit Rundlaufgenauigkeit aufweist.

## Patentansprüche

1. Werkzeughalter (1d; 1f) für Werkzeuge, insbesondere für Bohr-, Dreh-, Fräs-, Reib- oder Schleifwerkzeuge,
mit einer Werkzeughalterlängsachse (A) und
einem Schaft (2d) zur Kupplung des Werkzeughalters (1d; 1f) an eine Werkzeugmaschine,
wobei in Bezug auf die Längsachse (A) an den Kupplungsschaft (2d) ein Mittelteil (2'd) angrenzt, an das Mittelteil (2'd) ein Futter (3d) angrenzt und das Futter (3d) eine Werkzeugaufnahme (4), mit der ein Werkzeug (5) lösbar verbindbar ist, aufweist,
wobei der Werkzeughalter (1d; 1f) aus Modulen (2'd, 3d) gebildet ist und wenigstens ein erstes Modul (3d) mit einem in Bezug auf die Längsachse (A) des Werkzeughalters (1d; 1f) in Richtung des Kupplungsschaftes (2d) angrenzenden zweiten Modul (2'd) lösbar verbunden ist und jeweils zwischen den miteinander lösbar verbundenen Modulen (3d, 2'd) eine zentrierende Schnittstelle (51) vorgesehen ist, die durch einen oder mehrere, einstückig an dem zweiten Modul (2'd) angeordnete Stützflächenabschnitte (52, 54) gebildet wird, die sich gegen einen bzw. mehrere, einstückig an dem ersten Modul (3d) angeordnete Gegenflächenabschnitte (53, 55) abstützen, wobei wenigstens eine der Schnittstellen (51) so ausgebildet ist, dass das erste Modul (3d) gegenüber dem zweiten Modul (2'd) radial unverspannt oder wenigstens radial nach außen verspannt ist,
**dadurch gekennzeichnet, dass**
wenigstens bei einer Schnittstelle (51) nahe dem Außendurchmesser des Werkzeughalters (1d; 1f) ein Plansitz und ein Konussitz vorgesehen sind, wobei der Plansitz zwischen rechtwinklig zur Längsachse (A) des Werkzeughalters (1d; 1f) verlaufenden Anlageflächen (52, 53) und der Konussitz zwischen geneigt zur Längsachse (A) des Werkzeughalters (1d; 1f) verlaufenden Anlageflächen (54, 55) gebildet ist.

2. Werkzeughalter (1d; 1f) gemäß Anspruch 1, **dadurch gekennzeichnet, dass** wenigstens ein Stützflächenabschnitt (52, 54) in Bezug auf den Radius des Werkzeughalters (1d; 1f) in einem Winkel größer 0° und kleiner 180° geneigt zur Längsachse (A) verläuft und in direktem Kontakt mit einem der Gegenflächenabschnitte (53, 55) der Schnittstelle (51) steht.

3. Werkzeughalter (1f) gemäß Anspruch 1 oder 2, **dadurch gekennzeichnet, dass** Futter (3d) und Werkzeughalteraufnahme (4f) Module bilden, die direkt miteinander lösbar verbunden sind und/oder **dass** Mittelteil (2'd) und Futter (3d) Module bilden, die direkt miteinander lösbar verbunden sind.

4. Werkzeughalter gemäß Anspruch 3, **dadurch gekennzeichnet, dass** das Futter neben der Werkzeugaufnahme aus weiteren einzelnen, direkt miteinander lösbar verbunden Modulen gebildet ist.

5. Werkzeughalter (1d; 1f) gemäß einem der vorherigen Ansprüche, **dadurch gekennzeichnet, dass** die Zentrierung wenigstens einer Schnittstelle (51) nahe dem Außendurchmesser des Werkzeughalters (1d; 1f) erfolgt, insbesondere in Bezug auf den Radius des Werkzeughalters (1d; 1f) an der Schnittstelle (51) zwischen dem halben Radius und dem Außendurchmesser des Werkzeughalters (1d; 1f) angeordnet ist.

6. Werkzeughalter (1d; 1f) gemäß einem der vorherigen Ansprüche, **dadurch gekennzeichnet, dass** der Plansitz und der Konussitz in Bezug auf den Radius des Werkzeughalters (1d; 1f) an der Schnittstelle (51) zwischen dem halben Radius und dem Außendurchmesser des Werkzeughalters (1d; 1f) vorgesehen sind.

7. Werkzeughalter (1d; 1f) gemäß einem der vorherigen Ansprüche, **dadurch gekennzeichnet, dass** wenigstens bei einer Schnittstelle (51) ein Stützflächenabschnitt (54) die Form einer konischen Ringfläche aufweist, wobei insbesondere ein weiterer Stützflächenabschnitt vorgesehen ist, der als konische, gegenläufige Ringfläche ausgebildet ist, wobei die Stützflächenabschnitte die Gegenflächenabschnitte (55) axial zumindest teilweise hintergreifen.

8. Werkzeughalter (1g) gemäß einem der vorherigen Ansprüche, **dadurch gekennzeichnet, dass** zumindest in einem Bereich der Schnittstelle (9g) zwischen den Stützflächen- und Gegenflächenabschnitten der Schnittstelle (9g) ein Schwingungsdämpfer (115) angeordnet ist, wobei der Schwingungsdämpfer (115) bevorzugt als Ring aus einem weichen Material, wie Kunststoff oder Blei, gebildet ist, und in einer Vertiefung in dem Plansitz angeordnet ist.

9. Werkzeughalter (1e) gemäß einem der vorherigen Ansprüche, **dadurch gekennzeichnet, dass** wenigstens eine Schnittstelle (9, 51) eine Verdrehsicherung (66, 67) aufweist.

10. Werkzeughalter (1g) gemäß einem der vorherigen Ansprüche, **dadurch gekennzeichnet, dass** die Schnittstelle (9g) mit einer polygonförmigen Kontur (118) zur Drehmomentübertragung versehen ist.

11. Werkzeughalter (1e) gemäß einem der vorherigen Ansprüche, **dadurch gekennzeichnet, dass** die lösbare Verbindung an wenigstens einer Schnittstelle (51) eine Schraubverbindung ist, wobei wenigstens eines der lösbaren ersten oder zweiten Module (3e) eine Aufnahmebohrung (61) mit einem Innengewinde aufweist, in die ein Außengewinde formschlüssig eingreift.

12. Werkzeughalter gemäß Anspruch 11, **dadurch gekennzeichnet, dass** das Außengewinde an einer frei drehbaren Zylinderschraube angeordnet ist, die an dem benachbarten zweiten bzw. ersten Modul mit ihrem Kopf axial anliegt.

13. Werkzeughalter (1e) gemäß Anspruch 11 oder 12, **dadurch gekennzeichnet, dass** das Außengewinde an einem Gewindestift (62) angeordnet ist, der ein weiteres Außengewinde aufweist, das in das Innengewinde einer Aufnahmebohrung in dem benachbarten zweiten bzw. ersten Modul (2'd) formschlüssig eingreift, wobei vorzugsweise die Außengewinde des Gewindestiftes (62) gegenläufig und mit unterschiedlicher Steigung, gegenläufig und mit gleicher Steigung oder gleichläufig und mit unterschiedlicher Steigung ausgebildet sind.

14. Werkzeughalter (1g) gemäß einem der vorherigen Ansprüche, **dadurch gekennzeichnet, dass** die lösbare Verbindung an wenigstens einer Schnittstelle (9g) über ein Spannsystem hergestellt wird, das aus einem Zugstück (110) mit Zugteller (111) und einer Schirmzange (112) besteht, wobei die Schirmzange (112) bei Betätigung des Zugstücks (110) über den Zugteller (111) ein Modul (5g) gegenüber dem anderen Modul (4g) der Schnittstelle (9g) verspannt, wobei vorzugsweise das Zugstück (110) durch Eingriff durch den Kupplungs-schaft (2g) betätigbar ist, wobei insbesondere ein am Zugstück (110) angeordnetes Außengewinde in ein entsprechendes Innengewinde eingreift, das in Wirkverbindung mit dem Kupplungsschaft (2g) steht oder vorzugsweise das Zugstück (110) durch Eingriff entlang oder quer zu der Werkzeughalterlängsachse (A) durch das Werkzeug (5h; 5i) betätigbar ist, wobei insbesondere ein Druckstück (120') vorgesehen ist, das auf den Zugteller (111) einwirkt, wobei das Druckstück (120') über eine Spannschraube (120) betätigt wird.

15. Werkzeughalter (1) für Werkzeuge, insbesondere für Bohr-, Dreh-, Fräs-, Reib- oder Schleifwerkzeuge,
mit einer Werkzeughalterlängsachse (A) und
einem Schaft (2) zur Kupplung des Werkzeughalters (1) an eine Werkzeugmaschine, wobei in Bezug auf die Längsachse (A) an den Kupplungsschaft (2) ein Mittelteil (2') angrenzt, an das Mittelteil (2') ein Futter (3) angrenzt und das Futter (3) eine Werkzeugaufnahme (4), mit der ein Werkzeug (5) lösbar verbindbar ist, aufweist, wobei ein oder mehrere Stützflächenabschnitte einstückig an der Werkzeugaufnahme (4) ausgebildet sind, die gegen einen bzw. mehrere, einstückig an einem Werkzeug (5) angeordnete Gegenflächenabschnitte abstützbar sind und so zusammen mit den Gegenflächenabschnitten des aufgenommenen Werkzeugs (5) eine zwischen dem Werkzeughalter (1) und dem Werkzeug (5) angeordnete zentrierende Schnittstelle (9) bilden,
wobei der Werkzeughalter (1) im wesentlichen einstückig oder modular gemäß einem der vorherigen Ansprüche aufgebaut ist, **dadurch gekennzeichnet, dass** die Schnittstelle (9) zwischen Werkzeug (5) und Werkzeughalter (1) entsprechend einem der Ansprüche 1, 2 und 5 bis 16 ausgebildet ist.

16. System aus einem Werkzeughalter (1) gemäß einem der vorherigen Ansprüche und einem Werkzeug (5), insbesondere einem Bohr- Dreh-, Fräs-, Reib- oder Schleifwerkzeug, als lösbarem Modul.

17. Werkzeug insbesondere Bohr-, Dreh-, Fräs-, Reib-, oder Schleifwerkzeuge zur Aufnahme in einem Werkzeughalter gemäß einem der Ansprüche 1 bis 15 und/ oder in einem System gemäß Anspruch 16.

## Claims

1. A tool holder (1d; 1f) for tools, in particular for drilling-, turning-, milling-, reaming- or grinding tools,
with a longitudinal tool holder axis (A) and
a shaft (2d) for coupling the tool holder (1d; 1f) to a machine tool,
wherein with reference to the longitudinal axis (A), a center component (2'd) is adjacent to the coupling shaft (2), a chuck (3d) is adjacent to the center component (2'd) and the chuck (3d) comprises a tool receiver (4) to which a tool (5) can be disengageably connected,
wherein the tool holder (1d; 1f) is configured from modules (2'd, 3d) and at least a first module (3d) is disengageably connected to a second module (2'd), which is adjacent with respect to the longitudinal axis (A) of the tool holder (1d; 1f) in the direction of the coupling shaft (2d), and wherein respectively between the modules (3d, 2'd) disengageably connected among one another, a centering interface (51) is provided which is formed by one or plural support surface sections (52, 54), which are integrally disposed at the second module (2'd), which are supported at one or plural opposite surface sections (53, 55), which are integrally configured at the first module (3d), wherein at least one of the interfaces (51) is configured so that the first module (3d) is not radially clamped relative to the second module (2'd), or at least clamped in radially outward direction,
**characterized by the fact that**
at least at one interface (51), a planar seat and a conical seat are provided proximal to the outer diameter of the tool holder (1d; 1f), wherein the planar seat is configured between contact surfaces (52, 53) extending orthogonal to the longitudinal axis (A) of the tool holder (1d; 1f) and the conical seat is configured between contact surfaces (54, 55) extending at an angle to the longitudinal axis (A) of the tool holder (1d; 1f).

2. The tool holder (1d; 1f) according to claim 1, **characterized by the fact that** at least one support surface section (52, 54) is inclined with reference to the radius of the tool holder (1d; 1f) at an angle greater than 0° and smaller than 180° relative to the longitudinal axis (A) and is in direct contact with one of the opposite surface sections (53, 55) of the interface (51).

3. The tool holder (1f) according to claim 1 or 2, **characterized by the fact that** the chuck (3d) and the tool holder receiver (4f) form modules which are directly disengageably connected with one another and/or **that** the center component (2'd) and the chuck (3d) form modules which are directly disengageably connected with one another.

4. The tool holder according to claim 3, **characterized by the fact that** the chuck in addition to the tool receiver is formed from additional single, directly disengageable connected modules.

5. The tool holder (1d; 1f) according to one of the preceding claims, **characterized by the fact that** the centering of at least one interface (51) is performed proximal to the exterior diameter of the tool holder (1d; 1f), and the centering is disposed in particular with reference to the radius of the tool holder (1d; 1f) at the interface (51) between the half radius and the outer diameter of the tool holder (1d; 1f).

6. The tool holder (1d; 1f) according to one of the preceding claims, **characterized by the fact that** the planar seat and the conical seat are provided at the interface (51) between the half radius and the outer diameter of the tool holder (1d; 1f) with reference to the radius of the tool holder (1d; 1f).

7. The tool holder (1d; 1f) according to one of the preceding claims, **characterized by the fact that** at least at one interface (51), a support surface section (54) has the form of a conical annular surface, wherein in particular a further support surface section is provided which is formed as a conical opposed annular surface, wherein the support surface section at least partially reaches behind the opposite surface sections (55) in axial direction.

8. The tool holder (1g) according to one of the preceding claims, **characterized by the fact that** at least in one portion of the interface (9g), a vibration damper (115) is disposed between the support surface sections and the opposite surface sections of the interface (9g), wherein the vibration damper (115) is preferably configured as a ring made of a soft material, like plastic or lead, and is disposed in a recess in the planar seat.

9. The tool holder (1e) according to one of the preceding claims, **characterized by the fact that** at least one interface (9, 51) comprises a rotation safety (66, 67).

10. The tool holder (1g) according to one of the preceding claims, **characterized by the fact that** the interface (9g) is provided with a polygon shaped contour (118) for torque transmission.

11. The tool holder (1e) according to one of the preceding claims, **characterized by the fact that** the disengageable connection is a threaded connection at least at one surface (51), wherein at least one of the disengageable first or second modules (3e) comprises a receiver bore hole (61) with an inner thread, in which an outer thread engages through form locking.

12. The tool holder according to claim 11, **characterized by the fact that** the outer thread is disposed at a freely rotatable bolt with a cylindrical head, which axially contacts the adjacent second or first module with its head.

13. The tool holder (1e) according to claim 11 or 12, **characterized by the fact that** the outer thread is disposed on a threaded pin (62), which comprises another outer thread, which engages the inner thread of a receiver bore hole in the adjacent second or first module (2'd) through form locking, wherein preferably the outer threads of the threaded pin (62) are configured to run in different directions and with a different pitch, to run in different directions with identical pitch or to run in the same direction with a different pitch.

14. The tool holder (1g) according to one of the preceding claims, **characterized by the fact that** the disengageable connection at least at one interface (9g) is established through a clamping system, which is comprised of a tension piece (110) with a tension disk (111) and an expanded head collet (112), wherein the expanded head collet (112) clamps a module (5g) relative to the other model (4g) of the interface (9g) when the tension piece (110) is actuated through the tension disk (111), wherein preferably the tension piece (110) can be actuated through engagement by the coupling shaft (2g), wherein in particular an outer thread which is disposed at the tension piece (110) engages a respective inner thread, which is in operative engagement with the coupling shaft (2g) or that preferably the tension piece (110) can be actuated by the tool (5h; 5i) through engagement along or transversal to the tool holder longitudinal axis (A), wherein in particular a pressure piece (120') is provided which acts upon the tension disk (111), wherein the pressure piece (120') is actuated through a tension bolt (120).

15. The tool holder (1) for tools, in particular for drilling-, turning-, milling-, reaming- or grinding tools,
with a longitudinal tool holder axis (A) and
a shaft (2) for coupling the tool holder (1) to a machine tool, wherein with reference to the longitudinal axis (A), a center component (2') is adjacent to the coupling shaft (2), a chuck (3) is adjacent to the center component (2') and the chuck (3) comprises a tool receiver (4) to which a tool (5) can be disengageably connected,
wherein one or plural support surface sections are integrally configured at the tool receiver (4), which are supportable at one or plural opposite surface sections integrally configured at a tool (5), thus forming a centering interface (9) disposed between the tool holder (1) and the tool (5) together with the opposite surface section of the received tool (5),
wherein the tool holder (1) is configured substantially integral or modular according to one of the preceding claims, **characterized by the fact that** the interface (9) between the tool (5) and the tool holder (1) is configured according to one of the preceding claims 1, 2 and 5 to 16.

16. A system, comprising a tool holder (1) according to one of the preceding claims and a tool (5), in particular a drilling, turning, milling, reaming or grinding tool, as a disengageable module.

17. A tool, in particular a drilling, turning, milling, reaming or grinding tool for being received in a tool holder according to one of claims 1 to 15 and/or in a system according to claim 16.

## Revendications

1. Porte-outil (1d ; 1f) pour outils, en particulier pour outils de perçage, de tournage, de fraisage, d'alésage ou de meulage,
avec un axe longitudinal de porte-outil (A) et
une tige (2d) pour l'accouplement du porte-outil (1d ; 1f) à une machine-outil,
une partie centrale (2'd) étant adjacente à la tige d'accouplement (2d) par rapport à l'axe longitudinal (A), un mandrin (3d) étant adjacent à la partie centrale (2'd), et le mandrin (3d) présentant un logement d'outil (4) auquel un outil (5) peut être raccordé de façon détachable,
le porte-outil (1d ; 1f) étant formé de modules (2'd, 3d), et au moins un premier module (3d) étant raccordé de façon détachable à un deuxième module (2'd) adjacent par rapport à l'axe longitudinal (A) du porte-outil (1d ; 1f) dans la direction de la tige d'accouplement (2d), et une interface (51) de centrage étant respectivement prévue entre les modules (3d, 2'd) raccordés l'un à l'autre de façon détachable, et étant formée d'un ou de plusieurs segments de surface d'appui (52, 54) qui sont disposés d'une seule pièce sur le deuxième module (2'd) et qui s'appuient contre un ou respectivement plusieurs segments de contre-surface (53, 55) disposés d'une seule pièce sur le premier module (3d), au moins une des interfaces (51) étant constituée de telle sorte que le premier module (3d) n'est pas serré radialement par rapport au deuxième module (2'd) ou est serré au moins radialement vers l'extérieur,
**caractérisé en ce que**,
au moins dans le cas d'une interface (51), il est prévu un siège plan et un siège conique à proximité du diamètre extérieur du porte-outil (1d ; 1f), le siège plan étant formé entre des surfaces d'appui (52, 53) disposées à angle droit par rapport à l'axe longitudinal (A) du porte-outil (1d ; 1f), et le siège conique étant formé entre des surfaces d'appui (54, 55) disposées de façon inclinée par rapport à l'axe longitudinal (A) du porte-outil (1d ; 1f).

2. Porte-outil (1d ; 1f) selon la revendication 1, **caractérisé en ce qu'**au moins un segment de surface d'appui (52, 54) forme, par rapport au rayon du porte-outil (1d ; 1f), un angle d'inclinaison sur l'axe longitudinal (A) qui est supérieur à 0° et inférieur à 180°, et est en contact direct avec un des segments de contre-surface (53, 55) de l'interface (51).

3. Porte-outil (1f) selon la revendication 1 ou 2, **caractérisé en ce que** le mandrin (3d) et le logement de porte-outil (4f) forment des modules qui sont raccordés directement l'un à l'autre de façon détachable et/ou **en ce que** la partie centrale (2'd) et le mandrin (3d) forment des modules qui sont raccordés directement l'un à l'autre de façon détachable.

4. Porte-outil selon la revendication 3, **caractérisé en ce que** le mandrin, outre le logement de porte-outil, est formé d'autres modules individuels qui sont raccordés directement les uns autres de façon détachable.

5. Porte-outil (1d ; 1f) selon une des revendications précédentes, **caractérisé en ce que** le centrage d'au moins une interface (51) s'effectue à proximité du diamètre extérieur du porte-outil (1d ; 1f), en particulier est disposé, par rapport au rayon du porte-outil (1d ; 1f), à l'interface (51) entre le demi-rayon et le diamètre extérieur du porte-outil (1d ; 1f).

6. Porte-outil (1d ; 1f) selon une des revendications précédentes, **caractérisé en ce que** le siège plan et le siège conique sont, par rapport au rayon du porte-outil (1d ; 1f), prévus à l'interface (51) entre le demi-rayon et le diamètre extérieur du porte-outil (1d ; 1f).

7. Porte-outil (1d ; 1f) selon une des revendications précédentes, **caractérisé en ce que**, au moins dans le cas d'une interface (51), un segment de surface d'appui (54) présente la forme d'une surface annulaire conique, un autre segment de surface d'appui étant en particulier prévu qui est constitué en tant que surface annulaire conique en sens contraire, les segments de surface d'appui agrippant au moins partiellement par l'arrière axialement les segments de contre-surface (55).

8. Porte-outil (1g) selon une des revendications précédentes, **caractérisé en ce qu'**un amortisseur de vibrations (115) est disposé au moins dans une zone de l'interface (9g) entre les segments de surface d'appui et les segments de contre-surface de l'interface (9g), l'amortisseur de vibrations (115) étant formé de préférence en tant qu'anneau en matériau tendre, comme de la matière plastique ou du plomb, et étant disposé dans un creux dans le siège plan.

9. Porte-outil (1e) selon une des revendications précédentes, **caractérisé en ce qu'**au moins une interface (9, 51) présente un blocage anti-torsion (66, 67).

10. Porte-outil (1g) selon une des revendications précédentes, **caractérisé en ce que** l'interface (9g) est munie d'un contour (118) polygonal pour la transmission du couple.

11. Porte-outil (1e) selon une des revendications précédentes, **caractérisé en ce que**, sur au moins une interface, le raccordement détachable est un assemblage vissé (51), au moins un des premier ou deuxième modules (3e) détachables présentant un alésage de réception (61) avec un filet intérieur dans lequel engrène par liaison de forme un filet extérieur.

12. Porte-outil selon la revendication 11, **caractérisé en ce que** le filet extérieur est disposé sur une vis à tête cylindrique pouvant tourner librement qui est adjacente axialement par sa tête au deuxième ou respectivement au premier module voisin.

13. Porte-outil (1e) selon la revendication 11 ou 12, **caractérisé en ce que** le filet extérieur est disposé sur une tige filetée (62) qui présente un autre filet extérieur qui engrène par liaison de forme dans le filet intérieur d'un alésage de réception dans le deuxième ou respectivement le premier module voisin (2'd), les filets extérieurs de la tige filetée (62) étant de préférence constitués en sens contraire et avec une pente différente, en sens contraire et avec la même pente ou de même sens et avec une pente différente.

14. Porte-outil (1g) selon une des revendications précédentes, **caractérisé en ce que** le raccordement détachable est réalisé au moins sur une interface (9g) par le biais d'un système de serrage qui se compose d'une pièce de traction (110) avec une platine de traction (111) et d'une pince de préhension (112), la pince de préhension (112) serrant, lors de l'actionnement de la pièce de traction (110) par le biais de la platine de traction (111), un module (5g) par rapport à l'autre module (4g) de l'interface (9g), la pièce de traction (110) pouvant de préférence être actionnée par engrènement par la tige d'accouplement (2g), un filet extérieur disposé sur la pièce de traction (110) engrenant en particulier dans un filet intérieur correspondant qui est en liaison opératoire avec la tige d'accouplement (2g), ou bien la pièce de traction (110) pouvant de préférence être actionnée par engrènement le long de ou transversalement à l'axe longitudinal d'outil (A) par l'outil (5h ; 5i), une pièce de pression (120') étant en particulier prévue, qui agit sur la platine de traction (111), la pièce de pression (120') étant actionnée par le biais d'une vis de serrage (120).

15. Porte-outil (1) pour outils, en particulier pour outils de perçage, de tournage, de fraisage, d'alésage ou de meulage,
avec un axe longitudinal d'outil (A) et
une tige (2) pour l'accouplement du porte-outil (1) à une machine-outil, une partie centrale (2') étant adjacente à la tige d'accouplement (2) par rapport à l'axe longitudinal (A), un mandrin (3) étant adjacent à la pièce centrale (2'), et le mandrin (3) présentant un logement d'outil (4) auquel un outil (5) peut être raccordé de façon détachable, un ou plusieurs segments de surface d'appui étant constitués d'une seule pièce sur le logement d'outil (4) et pouvant s'appuyer contre un ou plusieurs segments de contre-surface disposés d'une seule pièce sur un outil (5) et formant ainsi, de concert avec les segments de contre-surface de l'outil (5) reçu, une interface (9) de centrage disposée entre le porte-outil (1) et l'outil (5),
le porte-outil (1) étant structuré essentiellement d'une seule pièce ou de façon modulaire selon une des revendications précédentes, **caractérisé en ce que** l'interface (9) est constituée entre l'outil (5) et le porte-outil (1) conformément à une des revendications 1, 2 et 5 à 16.

16. Système composé d'un porte-outil (1) selon des revendications précédentes et d'un outil (5), en particulier un outil de perçage, de tournage, de fraisage, d'alésage ou de meulage, en tant que module détachable.

17. Outil, en particulier outil de perçage, de tournage, de fraisage, d'alésage ou de meulage, pour réception dans un porte-outil selon une des revendications 1 à 15 et/ou dans un système selon la revendication 16.
